# EUROPEAN PATENT SPECIFICATION

(11) **EP 2 461 956 B1**
(45) Date of publication and mention of the grant of the patent: **17.07.2019**
(21) Application number: 10742343.6
(22) Date of filing: 27.07.2010
(51) Int. Cl.: B29C 44/06, B32B 5/32, B32B 7/08, B32B 7/12, B29C 44/56, B32B 3/30, C08J 9/00, C08J 9/12, B29K 105/00, B29L 9/00

(54) **PROCESS FOR PREPARING A THICK DIMENSIONALLY STABLE INFRARED ABSORBING FOAM**
VERFAHREN ZUR HERSTELLUNG EINER DICKER UND FORMBESTÄNDIGER INFRAROT-ABSORPTIONSSCHAUMSTOFF
PROCÉDÉ POUR PRODUIRE UNE MOUSSE ÉPAISSE ET DIMENSIONNELLEMENT STABLE ABSORBANT LES INFRAROUGES

(30) Priority: 05.08.2009 US 231440 P
(43) Date of publication of application: 13.06.2012
(73) Proprietor: Dow Global Technologies LLC, Midland, MI 48674 (US)
(72) Inventor: GORDON-DUFFY, John, F-67610 La Wantzenau (FR); BORGWARDT, Anett, 77815 Buehl B W (DE)
(74) Representative: Beck Greener LLP
(86) International application number: PCT/US2010/043325
(87) International publication number: WO 2011/017076

(56) References cited:
- EP-A1- 0 922 554
- US-A- 4 636 425
- US-A- 5 844 014

## Description

### BACKGROUND OF THE INVENTION

### Field of the Invention

The present invention relates to a process for preparing polymeric foam articles containing infrared absorbents.

### Description of Related Art

Thermally insulating polymeric foam articles are commonplace in building and construction applications for increasing the energy efficiency of a structure. However, increasing regulations on blowing agent compositions have made it increasingly difficult to prepare polymeric foam with high thermal insulating ability.

Preparing polymeric foam from environmentally acceptable blowing agents is desirable to preserve the environment. For years, halogenated blowing agents have been standard in the industry for manufacturing thermally insulating polymeric foam. Halogenated blowing agents offer benefits in their ability to expand the polymer into foam as well as a thermal insulating resident in the foam cells. Regulations limiting use of halogenated blowing agents are increasing globally due to concerns that they detrimentally affect the environment. Naturally occurring compounds such as carbon dioxide are of particular interest as a naturally occurring and non-halogenated blowing agent.

Use of carbon dioxide as a blowing agent creates challenges in achieving polymeric foam having desirable dimensional stability. Carbon dioxide permeates out of polymeric foam cells faster than air permeates into the cells. As a result, polymeric foam containing carbon dioxide tends to shrink, warp, bow, collapse, or any combination thereof over time as the carbon dioxide permeates out thereby creating a vacuum in the foam cells until air can permeate in to replace the carbon dioxide. This affect becomes particularly evident as foams become thicker. Such dimensional instability undesirably causes polymeric foam to warp, bow, shrink or any combination thereof. This undesirable affect can be particularly troublesome for carbon dioxide-containing foam sitting at a job site in hot sunlight. Carbon dioxide permeation rate increases with temperature. Therefore, as foam warms in the sun the warmed portions of foam experience a vacuum at a greater rate than cooler portions of foam, resulting in warping or bowing.

Infrared attenuating agents, such as infrared absorbing additives, are desirable additives to thermally insulating polymeric foam articles because they enhance the thermal insulating properties of the foam. However, including infrared absorbing agents, such as carbon black and graphite, in foam increases the foam's propensity to absorb infrared radiation, which increases the foam's temperature. Increasing the polymeric foam's temperature can be particularly problematic for dimensional stability of the foam, particularly if the foam contains carbon dioxide in its cells. Heating the foam more quickly or to a higher temperature facilitates escape of the carbon dioxide from foam cells and induces dimensional instability, especially if heating is inhomogeneous as is the case when sun shines on one surface but not an opposing surface of the foam. As a result, there is a struggle in balancing infrared absorbing properties of foam with dimensional stability properties.

Increasing polymeric foam thickness can also be desirable for thermally insulating polymeric foam because increasing thickness provides a greater thermally insulating barrier. However, increasing thickness can result in a greater temperature gradient from one side of the foam to the other, particularly if the sun shines on one side while the cool ground contacts an opposing side. When the foam contains carbon dioxide, the carbon dioxide will tend to permeate out from the warmer side faster than the cooler side resulting in bowing of the foam.

EP1754745 offers a solution to polymeric foam dimensional stability in the presence of infrared radiation by coating a surface of the polymeric foam with a highly reflective coating.

DE2710402 proposes reducing dimensional stability by laminating high density polymer foam to low density polymer foam in order to stabilize the dimensional stability of the low density foam. However, including high density foam in the structure is undesirable for thermal insulating structures because high density foam typically increases cost.

EP1213118B1 discloses laminating extruded polymeric foams together without skins and their adhered surfaces so as to enhance diffusibility between two bonded foam panels.

It is desirable to be able to be able to produce thick (at least 50 millimeter thick) thermally insulating foam with carbon dioxide and include an infrared absorbing agent to maximize thermal insulating properties without experiencing dimensional instability. It is particularly desirable to be able to produce such insulating foam having that is free of a highly reflective coating on its surface and/or combining high and low density polymeric foam.

EP0922554A1 describes a process for producing a polymer or copolymer multilayer foam, comprising the steps: (a) providing at least one foamable composition comprising at least one polymer or copolymer and a blowing agent formulation, (b) extruding the composition through a die having a plurality of orifices, (c) foaming the extruded composition at a foaming temperature which is above the glass-transition temperature or the melting temperature of the polymer composition, (d) maintaining the foaming product at an elevated temperature for a sufficient period of time to obtain adhesion between individual foam layers, and (e) allowing the foamed product to cool.

### BRIEF SUMMARY OF THE INVENTION

A surprising discovery in the research leading to the present invention is that dimensional stability problems with carbon dioxide-blown thermally insulating foams are most evident when the foam is 50 or more millimeters thick. The present invention offers an unexpected solution to the problem of preparing thermally insulating foam that is at least 50 millimeters thick, made with carbon dioxide, that contains infrared absorbing agents and that is free from noticeable warping, shrinking or bowing (*that is,* possesses dimensional instability). The present invention solves the problem by adhering polymeric foam sheets together in layered orientation where at least one of the foam sheets contains an infrared absorbing agent. Dimensional stability of polymeric foams containing infrared absorbent agents is more challenging to achieve than dimensional stability in polymeric foams without infrared absorbing agents. The presence of infrared absorbing agents cause a polymeric foam to readily absorb infrared radiation on an exposed surface, which can readily lead to temperature gradients in a polymeric foam. The present invention can solve the problem without relying on reflective coatings or combinations of high and low density foam.

The surprising solution of the present invention is to prepare thermally insulating foams that are at least 50 millimeters thick by combining multiple thinner thermally insulating boards affixed to one another chemically or mechanically in a layered orientation wherein at least one of the foams is made with carbon dioxide and contains infrared absorbing agents.

The present invention is a process for preparing a polymeric foam article, the process comprising: (a) providing a first polymeric foam containing at least one weight percent of an infrared absorbing agent relative to the entire first foam weight prepared using a blowing agent comprising carbon dioxide; and (b) providing a second polymeric foam; and (c) affixing the first and second foams together in a layered orientation to produce a polymeric foam article having a thickness of at least 50 millimeters that is dimensionally stable; wherein at least 50% of the primary surfaces of the first and second foam that are adhered to one another are free of surface skin.

The process of the present invention is useful for preparing dimensionally stable polymeric foam that contains infrared absorbent and that is suitable for thermal insulation applications.

### DETAILED DESCRIPTION OF THE INVENTION

### Terms

Foams and foam articles have mutually orthogonal length, width and thickness dimensions. Length has a magnitude equal to the dimension having the largest magnitude and for extruded foam typically lies in the extrusion direction of the foam. Width has a magnitude equal to or greater than the thickness and can be equal to the length.

"Primary surface" corresponds to a surface having the greatest planar surface area of any surface of the foam or foam article. Planar surface area is the surface area of a projection of a surface onto a plane so as to avoid accounting for surface texture (for example, pits, peaks or waves in the surface) in the surface area magnitude. Generally, the length and width define the primary surface of a polymeric foam article. Thickness often separates the primary surface from an opposing surface, which may also be a primary surface, of a polymeric foam article.

"Surface skin" of polymeric foam is a continuous polymeric film that covers a surface of polymeric foam, particularly extruded polymeric foam. The surface skin is removable by methods such as skiving.

"Layered orientation" corresponds to an orientation where the surface of one component is adjacent to the surface of another. For example, two foams are in a layered orientation when the surface of one foam is adjacent to the surface of another. Desirably, foams in a layered orientation have their primary surfaces adjacent to one another.

"Foamable adhesive" is an adhesive that expands into foam upon application to a substrate, or between substrates.

"Dimensionally stable" characterizes a polymeric foam article and refers to a polymeric foam article that deviates in flatness less than a specific extent over time. Determine if a polymeric foam article is "dimensionally stable" according to prEN 13164 (06-2009) under two conditions: (1) 23 +/- 5 degrees Celsius and 50 +/- 5 percent relative humidity; and (2) with a primary surface of the board fully exposed to the sun for two days of sun exposure having an ambient temperature maximum during each day of 45 degrees Celsius. An article is "dimensionally stable" if it has a deviation from flatness (Smax) in both width and length of 6 millimeters per meter or less as measured according to ECN825. Smax for width is normalized according the article width. Smax for length is normalized according to the article length.

Test methods refer to the test method of the year indicated in a hyphenated suffix of the test method number or, in an absence of such a hyphenated suffix, the most recent test method before the priority date of this document. "ASTM" refers to American Society for Testing and Materials. "EN" refers to European Norm. "DIN" refers to Deutsches Institut fur Normung. "ISO" refers to International Organization for Standards.

"And/or" means "and, or as an alternative". "Multiple" means "two or more".

### Process

The process of the present invention requires providing a first polymeric foam and a second polymeric foam. The first and second polymeric foams can be identical or can be different from one another in composition and/or physical properties. In similar respect, the first and second polymeric foams can both be prepared in an identical manner or in different ways. In one desirable embodiment, the first and second polymeric foams have equivalent compositions and physical properties and have been prepared in like manner.

The first polymeric foam, and optionally the second polymeric foam, is prepared using a blowing agent comprising carbon dioxide. Desirably, the first polymeric foam, more desirably both the first and the second polymeric foam, is extruded polymeric foam. Generally, extruded polymeric foam is a continuous, seamless polymeric matrix that defines cells within the matrix and that results from a single foamable composition expanding into a single extruded foam structure. However, one embodiment of extruded foam includes "strand foam". Strand foam comprises multiple extruded strands of foam defined by continuous polymer skins with the skins of adjoining foams adhered to one another. Polymer skins in strand foams extend only in the extrusion direction of the strand as opposed to expanded bead foam, which contains a polymer skin network extending in all dimensions. The following process describes how to prepare extruded polymeric foam yet the first and second polymeric foams can independently be any of type of foam including extruded, expanded and molded.

Prepare an extruded polymeric foam by providing a foamable polymer composition at an initial pressure (sufficiently high to preclude foaming) and temperature within an extruder, extruding the foamable composition through a foaming die into an atmosphere of lower pressure and temperature and allowing the foamable polymer composition to expand and cool into an extruded polymeric foam. The foamable polymer composition comprises a continuous thermoplastic polymer composition and a blowing agent. The blowing agent comprises carbon dioxide for the first polymeric foam and, pitionally, the second polymeric foam.

The thermoplastic polymer composition can contain one or more than one continuous thermoplastic polymer. The thermoplastic polymer is one or more than one amorphous polymer, semi-crystalline polymer, or a combination of amorphous and semi-crystalline polymers. Suitable thermoplastic polymers include alkenyl aromatic polymers and olefinic polymer. Desirably, select the thermoplastic polymer from styrenic homopolymers and copolymers, ethylene homopolymers and copolymer and propylene homopolymers and copolymers. Particularly desirable alkenyl aromatic polymers are styrene homopolymer and styrene-acrylonitrile copolymer. In one embodiment the continuous polymer composition is 85 weight-percent (wt%) or more polystyrene homopolymer. In another embodiment the continuous polymer composition is 85wt% or more styrene-acrylonitrile copolymer. Wt% is relative to total thermoplastic polymer weight in the thermoplastic polymer composition.

The thermoplastic polymer composition has a softening temperature and the initial temperature of the foamable polymer composition is higher than the softening temperature of the thermoplastic polymer composition. The softening temperature is equal to the highest glass transition temperature of the continuous amorphous polymers, the highest melting temperature of the continuous semi-crystalline polymers, or if the thermoplastic polymer composition comprises both continuous amorphous and continuous semi-crystalline polymer then the highest of the highest melting temperature and highest glass transition temperature represented by the continuous polymers.

The foamable polymer composition further comprises a blowing agent. Typically, the total amount of blowing agent present in the foamable polymer composition is three wt% or more, preferably four wt% or more and is typically ten wt% or less, preferably six wt% or less relative total polymer resin weight in the foamable polymer composition.

The blowing agent for manufacturing the first polymeric foam and, optionally the second polymeric foam, comprises carbon dioxide. Desirably, the concentration of carbon dioxide is two wt% or more, preferably three wt% or more and at the same time generally 6 wt% or less, preferably 5 wt% or less and most preferably 4.5 wt% or less relative to total polymer resin weight in the foamable polymer composition. Desirably, at least 40 wt% of the blowing agent is carbon dioxide, relative to total blowing agent weight.

The blowing agent can further comprise additional one or more than one additional blowing agent. Suitable additional blowing agents include any one or any combination of more than one of the following: inorganic gases such as argon, nitrogen, and air; organic blowing agents such as water, aliphatic and cyclic hydrocarbons having from one to nine carbons including methane, ethane, propane, n-butane, isobutane, n-pentane, isopentane, neopentane, cyclobutane, and cyclopentane; fully and partially halogenated alkanes and alkenes having from one to five carbons, preferably that are chlorine-free (e.g., difluoromethane (HFC-32), perfluoromethane, ethyl fluoride (HFC-161), 1,1,-difluoroethane (HFC-152a), 1,1,1-trifluoroethane (HFC-143a), 1,1,2,2-tetrafluoroethane (HFC-134), 1,1,1,2 tetrafluoroethane (HFC-134a), pentafluoroethane (HFC-125), perfluoroethane, 2,2-difluoropropane (HFC-272fb), 1,1,1-trifluoropropane (HFC-263fb), 1,1,1,2,3,3,3-heptafluoropropane (HFC-227ea), 1,1,1,3,3-pentafluoropropane (HFC-245fa), and 1,1,1,3,3-pentafluorobutane (HFC-365mfc)); fully and partially halogenated polymers and copolymers, desirably fluorinated polymers and copolymers, even more preferably chlorine-free fluorinated polymers and copolymers; aliphatic alcohols having from one to five carbons such as methanol, ethanol, n-propanol, and isopropanol; carbonyl containing compounds such as acetone, 2-butanone, and acetaldehyde; ether containing compounds such as dimethyl ether, diethyl ether, methyl ethyl ether; carboxylate compounds such as methyl formate, methyl acetate, ethyl acetate; carboxylic acid and chemical blowing agents such as azodicarbonamide, azodiisobutyronitrile, benzenesulfo-hydrazide, 4,4-oxybenzene sulfonyl semi-carbazide, p-toluene sulfonyl semi-carbazide, barium azodicarboxylate, N,N'-dimethyl-N,N'-dinitrosoterephthalamide, trihydrazino triazine and sodium bicarbonate.

Particularly desirable blowing agent combinations comprise, and can consist of, carbon dioxide or carbon dioxide with one or any combination of more than one of the following: iso-butane, water, and alcohols having two to three carbons.

Generally, it is desirably to cool the foamable polymer composition to a temperature below the initial temperature, yet that is still above the polymer composition softening temperature, prior to extruding through a foaming die. It is common to extrude the foamable polymer composition through an extrusion die into ambient temperature (approximately 25 ° C) and atmospheric pressure (approximately 760 millimeters of mercury).

The foamable polymer composition can also include additives. Typical additives include: infrared attenuating agents (*for example,* infrared absorbing agents such as carbon black and graphite, as well as reflective materials such as metal flake and titanium dioxide); clays such as natural absorbent clays (*for example,* kaolinite and montmorillonite) and synthetic clays; nucleating agents (*for example,* talc and magnesium silicate); flame retardants (*for example,* brominated flame retardants such as hexabromocyclododecane and brominated polymers, phosphorous flame retardants such as triphenylphosphate, and flame retardant packages that may including synergists such as, or example, dicumyl and polycumyl); lubricants (*for example,* calcium stearate and barium stearate); and acid scavengers (*for example,* magnesium oxide and tetrasodium pyrophosphate or an organic based acid scavenger). Desirably, the foamable polymer composition comprises an infrared attenuating agent, especially an infrared absorbing agent. Infrared attenuating agents that are in the foamable polymer composition end up dispersed in the resulting extruded polymeric foam. The total additive concentration in the foam is up to ten weight-percent based on total polymer weight.

The first polymeric foam comprises at least one weight percent infrared absorbing agents. Desirably, both of the first and second polymeric foams comprise an infrared absorbing agent. Preferably, the first, and desirably the second polymeric foam comprises at least one wt% infrared absorbing agent. The concentration of infrared absorbing agent in any of the polymeric foams comprising the present article can be one wt% or more, preferably two wt% or more and can be three wt% or more and even four wt% or more. Generally, the amount of infrared absorbing agent is five wt% or less based on total thermoplastic polymer composition weight.

The first polymeric foam has a density of 55 kilograms per cubic meter (kg/m³) or less, preferably 48 kg/m³ or less, still more preferably 40 kg/m3 or less, even more preferably 35 kg/m³ or less and yet more preferably 32 kg/m³ or less. Typically, the first and desirably also the second polymeric foam has a density of 16 kg/m³ or more to ensure the foam has mechanical integrity during handling. Likewise, the second polymeric foam can have a density in any of these ranges in combination with a first polymeric foam having a density in any of these ranges. Desirably, the first and second polymeric foams have a density within five kg/m³, preferably within two kg/m³ of one another and can have the same density. Measure density according to DIN ISO 845 or EN 1602.

The first polymeric foam can be open or closed cell. Desirably, the first polymeric foam has an open cell content of 30% or less, preferably 20% or less, more preferably 10% or less and can have an open cell content of 5% or less or even zero percent. Lower open cell content is typically desirable to achieve optimal thermal resistance. Likewise to the first polymeric foam, the second polymeric foam can have an open cell content in any of these ranges in combination with a first polymeric foam having an open cell content in any of these ranges. Measure open cell content according to EN ISO 4590.

The first polymeric foam desirably has an average cell size of two millimeters or less, preferably one millimeter or less, still more preferably 0.5 millimeters or less, yet more preferably 0.25 millimeters or less and even more preferably 0.15 millimeters or less. Cell sizes of 0.25 millimeters or less, particularly 0.15 millimeters or less are desirable for thermally insulating foam. Typically, the first polymeric foam has an average cell size of 0.05 millimeter or more, preferably 0.1 millimeter or more. If the cell size goes much below 0.1 millimeter thermal conductivity begins to increase. Likewise to the first polymeric foam, the second polymeric foam can have an average cell size in any of these ranges in combination with a first polymeric foam having an average cell size in any of these ranges. Measure average cell size according to ASTM D3576.

Affix the first and second polymeric foams using adhesives and optionally mechanical fasteners. Suitable adhesives can be open or can be closed to water vapor diffusion according to DIN 4108-3. One desirable type of adhesive for affixing the polymeric foams to one another is a foamable adhesive such as a foamable polyurethane adhesive (*for example,* INSTA STIK™ brand adhesive, INSTA STIK is a trademark of The Dow Chemical Company).

The first and second polymeric foams each have a primary surface and the primary surface of the first polymeric foam is affixed to the primary surface of the second polymeric foam. In yet another desirable embodiment, the first and second polymeric foams have planar primary surfaces that are affixed to one another. The surfaces affixed to one another can have grooves that mate with one another and/or can have skin on the surfaces or have skin fully or partially removed from the surfaces.

A surface of the first and/or second polymeric foam that is affixed to another polymeric foam can be free of at least 50% or all of a surface skin that is typically present on the polymeric foam. Surface skin tends to inhibit permeability through the surface of a polymeric foam. Removing the surface skin by, for example, skiving off the surface skin, exposes cells of the foam to the foam surface thereby removing a barrier to permeability through the surface. Removing the surface skin also creates a more textured surface, which can enhance adhesion to another surface by facilitating mechanical adhesion with an adhesive. Primary surfaces of a first and second polymeric foam are adhered to one another and at least 50% , preferably 75% or more and still more preferably 95% or more and even 100% of the surface skin of one or both adhered primary surfaces are free of surface skin. In such an embodiment, remove the surface skin prior to adhering the foam surfaces together.

The process can further include adhering additional polymeric foams to the first, second or both first and second polymeric foams. Additional foams can be the same or different from the first, second or both first and second polymeric foam. Additional foams have characteristics of second foams as described herein. Desirably, the first polymeric foam remains exposed in the foam article. Desirably, the first and second polymeric foam, preferably all of the polymeric foams in the article, contain infrared absorbents. Alternatively, one or more than one of the polymeric foams in the article can be free of infrared absorbents provided the first polymeric foam contains infrared absorbents. All of the polymeric foams in the article can be identical.

The first and second polymeric foams can have any thickness provided that a polymeric foam article comprising the first polymeric foam affixed to the second polymeric foam in layered fashion has a thickness of 50 millimeters or more. The polymeric foam article can be free of polymeric foam other than the first and second polymeric foam in which case the sum of thicknesses of the first and second polymeric foams is at least 50 millimeters. The polymeric foam article can comprise polymeric foam or foams in addition to the first and second polymeric foams. If the polymeric foam article comprises polymeric foam in addition to the first and second polymeric foams the additional polymeric foams are affixed to the first and/or second polymeric foams in a layered fashion to create a polymeric foam article having a thickness of 50 millimeters or more. The polymeric foam article can have a thickness of 75 millimeter or more, 100 millimeters or more, 120 millimeters or more, 150 millimeters or more, even 200 millimeters or more and still be dimensionally stable. Generally, the polymeric foam article has a thickness of 400 millimeters or less so that the article is easily handled. Desirably, the first polymeric foam remains exposed in the polymeric foam article.

The process of the present invention can be free of polymeric foam adhered to rigid non-polymeric foam layers such as wooden or metal sheets or boards, or a process step of adhering a polymeric foam to a rigid non-polymeric foam layer. Moreover, the first and second polymeric foams, in fact every foam in the article, can have similar or identical densities and still result in an article that is dimensionally stable.

The process of the present invention can be free of polymeric foam having a reflective coating, or a process step of applying a reflective coating to polymeric foam and yet still can produce polymeric foam articles that are dimensionally stable. That means articles produced by the present invention can be free of reflective coatings and yet still be dimensionally stable.

The process of the present invention can produce polymeric foam articles that are simultaneously free of reflective coatings, free of layers that are rigid and other than polymeric foam and that comprise polymeric foam having similar or even identical densities and yet that are dimensionally stable.

Surprisingly, adhering the first and second polymeric foams together creates a polymeric foam article having a dimensional stability that exceeds either the first or the second polymeric foam at a thickness equivalent to the polymeric foam article as carbon dioxide escapes and air permeates into the foam cells. For example, a polymeric foam article consisting of identical first and second polymeric foams prepared using a carbon dioxide blowing agent affixed together to form a 50 millimeter thick polymeric foam article that has greater dimensional stability than a single polymeric foam having a thickness of 50 millimeters that was prepared with the same blowing agent as the first and second polymeric foams. This result is particularly surprising in view of the fact that greater dimensional stability is achieved even when the first and optionally second polymeric foam contain an infrared absorbing agent, which are known to make dimensional stability more difficult to achieve. Polymeric foam articles made by the process of the present invention can be "dimensionally stable" even though they contain infrared absorbing agents, are made with carbon dioxide blowing agent and have a thickness of 50 millimeters or more.

More surprisingly, the polymeric foam articles of the present invention have dimensional stability without requiring a reflective coating on any exposed surface. The foam articles can have a reflective coating or can be free of a reflective coating on exposed surfaces and still be dimensionally stable.

### Examples

The following examples illustrate embodiments of the present invention.

### Single Layer Comparative Examples

Provide ten extruded polymeric foam boards of the following four thicknesses, at each thickness provide one with an infrared absorber and one without: 50 mm, 100 mm, 120 mm and 140 mm. Each board has width and length dimensions of 600 mm and 1250 mm respectively. Those containing an infrared attenuator contain three wt% carbon black based on polymer weight. Each foam board has an average density of approximately 34-35 kg/m³, an average cell size of 0.15-0.25 mm, are made using a blowing agent comprising carbon dioxide and are free of reflective coatings. Suitable commercially available foams for use include ROOFMATE® SL brand roof insulation for samples without infrared absorber and ROOFMATE® XENERGY™ SL brand roof insulation for samples with infrared absorber (ROOFMATE and XENERGY are trademarks of The Dow Chemical Company).

Expose a primary surface of each foam board to the sun for two days with an ambient temperature maximum of approximately 45 ° C for each of two days and measure the dimensional change (Smax) following the method of EN 825. Table 1 contains Smax values for the ten foams, normalized for board length and given in units of millimeters per meter of foam board (mm/m).

**Table 1**

| **Sample Thickness (mm)** | **50** | **50 w/CB*** | **100** | **100 w/CB*** | **120** | **120 w/CB*** | **140** | **140 w/CB*** |
|---|---|---|---|---|---|---|---|---|
| **Smax width (mm/m)** | 3.3 | 5 | 3.3 | 23.3 | 3.3 | 23.3 | 3.3 | 33.3 |
| **Smax length (mm/m)** | 1.6 | 7.2 | 4.8 | 16.8 | 5.6 | 20 | 7.2 | 21.6 |

| | | | | | | | | |
|---|---|---|---|---|---|---|---|---|
| * w/CB means "with carbon black". | | | | | | | | |

The data in Table 1 illustrates that achieving dimensionally stable extruded polymeric foam containing an infrared absorber is a dramatically more challenging problem than achieving dimensionally stable extruded polymeric foam without infrared absorber.

The data in Table 1 further illustrates that the extruded polymeric foam containing infrared absorbers is no longer dimensionally stable at thicknesses greater than 50 mm, with dimensional stability worsening with increasing foam board thickness. The data further shows that even without infrared absorbers the polymeric foam is no longer dimensionally stable at thicknesses of greater than 120 mm.

### Laminated Foam Boards

Prepare laminated foam board articles using 100 mm thick and 120 mm thick foam boards from the prior samples and 80 mm thick foam boards of similar composition and preparation as those from the prior samples. Adhere primary surfaces of adjoining boards together using INSTA-STIK® brand adhesive at a coating weight of 200 grams per square meter (INSTA-STIK is a trademark of The Dow Chemical Company). Table 2 identifies foam board combinations for the laminate boards and Smax values for those laminate boards after three days testing with sun exposed to a primary surface of the laminated foam board and peak ambient temperature of approximately 45°C each of the three days. Notably, the dimensional stability testing is more demanding than even that for the dimensional stability test because it requires a third day of exposure in the sun. Smax values for dimensional stability testing at 23 ° C and 50% relative humidity are not included because they are smaller than the reported values so if an article is dimensionally stable under the more stringent conditions during exposure to the sun they are dimensionally stable at 23°C and 50% relative humidity.

| **Sample** | **Description** | **Smax length (mm/m)** | **Smax width (mm/m)** |
|---|---|---|---|
| Comp Ex A | 160 mm thick laminate of two 80 mm thick boards that do not contain infrared absorbent. | 4 | 4.1 |
| Ex 1 | 160 mm thick laminate of two 80 mm thick boards, both containing three wt% carbon black. | 4 | 1.6 |
| Ex 2 | 240 mm thick laminate of three 80 mm thick boards, all three containing three wt% carbon black. | 4 | 1.6 |
| Ex 3 | 240 mm thick laminate of two 120 mm thick boards, both containing three wt% carbon black. | 4.8 | 0.8 |
| Ex 4 | 300 mm thick laminate of three 100 mm thick boards, all three containing three wt% carbon black. | 4.8 | 4.1 |

Each of the Examples (Exs) has a thickness that exceeds any of the individual boards in Table 1. One would expect the Exs to be even less dimensionally stable than those in Table 1, particularly since the testing even included an extra day of exposure to the sun. Surprisingly, all of the Exs qualify as dimensionally stable. In fact, dimensional stability is approximately that of a foam board without infrared absorbent.

These Exs illustrate the surprising result of achieving dimensional stability with polymeric foam boards containing infrared absorbents at thicknesses exceeding 50 mm, even exceeding 120 mm, even exceeding 200 mm and even at 300 mm by laminating thinner foam board together.

## Claims

1. A process for preparing a polymeric foam article, the process comprising:
a. providing a first polymeric foam comprising at least one weight percent of an infrared absorbing agent relative to the entire first foam weight prepared using a blowing agent comprising carbon dioxide; and
b. providing a second polymeric foam; and
c. affixing the first and second foams together in a layered orientation to produce a polymeric foam article having a thickness of at least 50 millimeters that is dimensionally stable wherein the first and second foams each have a primary surface and the primary surface of the first foam is affixed to the primary surface of the second foam;
wherein at least 50% of the primary surfaces of the first and second foam that are adhered to one another are free of surface skin.

2. The process of Claim 1, wherein step (a) includes expanding a foamable polymer composition comprising the infrared absorbing agent using a blowing agent comprising carbon dioxide.

3. The process of Claim 1, wherein the first polymeric foam remains exposed in the foam article

4. The process of Claim 1, wherein both first and second foams comprise infrared absorbing agent.

5. The process of Claim 1, wherein step (a) includes preparing the first polymeric foam using an extrusion process.

6. The process of Claim 5, wherein carbon dioxide makes up at least 40 weight- percent of the blowing agent weight.

7. The process of Claim 1, wherein the second polymeric foam is provided by preparing in a same manner as the first polymeric foam in step (a).

8. The process of Claim 1, wherein step (b) affixes the first and second foams together using an adhesive.

9. The process of Claim 1, wherein the adhesive is a foamable adhesive that forms adhesive foam between the first and second foams.

10. The process of Claim 1, wherein the first and second polymeric foam each have grooves so that in step (c) protrusions between grooves of one polymeric foam mate with the grooves of the other polymeric foam.

## Patentansprüche

1. Verfahren für die Herstellung eines polymeren Schaumstoffartikels, wobei das Verfahren Folgendes umfasst:
a. Bereitstellen eines ersten polymeren Schaumstoffs, der mindestens ein Gewichtsprozent eines Infrarot-absorbierenden Mittels mit Bezug auf das gesamte erste Gewicht des Schaumstoffs umfasst, der unter Anwendung eines Treibmittels, das Kohlendioxid umfasst, hergestellt wird; und
b. Bereitstellen eines zweiten polymeren Schaumstoffs; und
c. Befestigen der ersten und zweiten Schaumstoffe zusammen in einer schichtförmigen Orientierung, um einen polymeren Schaumstoffartikel herzustellen, der eine Dicke von mindestens 50 Millimetern aufweist, die dimensionsstabil ist, wobei die ersten und zweiten Schaumstoffe jeweils eine primäre Oberfläche aufweisen und die primäre Oberfläche des ersten Schaumstoffs an der primären Oberfläche des zweiten Schaumstoffs befestigt ist,
wobei mindestens 50 % der primären Oberflächen des ersten und zweiten Schaumstoffs, die aneinander anhängen, frei von Oberflächenhaut sind.

2. Verfahren nach Anspruch 1, wobei der Schritt (a) das Expandieren einer schäumbaren Polymerzusammensetzung, die das Infrarot-absorbierende Mittel umfasst, unter Anwendung eines Treibmittels, das Kohlendioxid umfasst, umfasst.

3. Verfahren nach Anspruch 1, wobei der erste polymere Schaumstoff im Schaumstoffartikel bloßgelegt bleibt.

4. Verfahren nach Anspruch 1, wobei sowohl der erste als auch der zweite Schaumstoff Infrarot-absorbierendes Mittel umfassen.

5. Verfahren nach Anspruch 1, wobei der Schritt (a) das Herstellen des ersten polymeren Schaumstoffs unter Anwendung eines Extrusionsvorgangs umfasst.

6. Verfahren nach Anspruch 5, wobei das Kohlendioxid mindestens 40 Gewichtsprozent des Treibmittelgewichts ausmacht.

7. Verfahren nach Anspruch 1, wobei der zweite polymere Schaumstoff durch Herstellen auf dieselbe Weise wie der erste polymere Schaumstoff in Schritt (a) bereitgestellt wird.

8. Verfahren nach Anspruch 1, wobei der Schritt (b) die ersten und zweiten Schaumstoffe unter Anwendung eines Klebstoffs aneinander befestigen.

9. Verfahren nach Anspruch 1, wobei der Klebstoff ein schäumbarer Klebstoff ist, der Klebstoffschaum zwischen dem ersten und dem zweiten Schaumstoff bildet.

10. Verfahren nach Anspruch 1, wobei der erste und der zweite polymere Schaumstoff jeweils Rillen aufweisen, so dass in Schritt (c) Vorsprünge zwischen Rillen eines polymeren Schaumstoffs auf die Rillen des anderen polymeren Schaumstoffs passen.

## Revendications

1. Procédé de préparation d'un article en mousse polymère, le procédé comprenant:
a. la fourniture d'une première mousse polymère comprenant au moins un pourcentage en poids d'un agent d'absorption des rayons infrarouges par rapport au premier poids entier de la mousse préparée en utilisant un agent d'expansion comprenant du dioxyde de carbone; et
b. la fourniture d'une seconde mousse polymère; et
c. l'apposition de la première et de la seconde mousse ensemble sous une orientation stratifiée pour produire un article en mousse polymère ayant une épaisseur d'au moins 50 millimètres qui est dimensionnellement stable, la première et la seconde mousse ayant chacune une surface primaire et la surface primaire de la première mousse étant apposée à la surface primaire de la seconde mousse;
où au moins 50 % des surfaces primaires de la première et de la seconde mousse qui adhèrent l'une à l'autre sont exemptes de pellicule de surface.

2. Procédé selon la revendication 1, l'étape (a) comprenant l'expansion d'une composition polymère pouvant être expansée comprenant l'agent d'absorption des rayons infrarouges en utilisant un agent d'expansion comprenant du dioxyde de carbone.

3. Procédé selon la revendication 1, la première mousse polymère restant exposée dans l'article en mousse.

4. Procédé selon la revendication 1, à la fois la première et la seconde mousse comprenant de l'agent d'absorption des rayons infrarouges.

5. Procédé selon la revendication 1, l'étape (a) comprenant la préparation de la première mousse polymère en utilisant un procédé d'extrusion.

6. Procédé selon la revendication 5, le dioxyde de carbone constituant au moins 40 pour cent en poids du poids de l'agent d'expansion.

7. Procédé selon la revendication 1, la seconde mousse polymère étant fournie par la préparation de la même manière que la première mousse polymère dans l'étape (a).

8. Procédé selon la revendication 1, l'étape (b) apposant la première et la seconde mousse ensemble en utilisant un adhésif.

9. Procédé selon la revendication 1, l'adhésif étant un adhésif pouvant être expansé qui forme une mousse adhésive entre la première et la seconde mousse.

10. Procédé selon la revendication 1, la première et la seconde mousse polymère ayant chacune des rainures de sorte que dans l'étape (c) les protubérances entre des rainures d'une mousse polymère correspondent aux rainures de l'autre mousse polymère.
